Europäisches Patentamt

European Patent Office

Office européen des brevets

(19)

(11) Numéro de publication: **0 158 576**
**A1**

# (12) DEMANDE DE BREVET EUROPEEN

(21) Numéro de dépôt: **85440001.7**

(22) Date de dépôt: **15.01.85**

(51) Int. Cl.⁴: **H 02 J 3/30**
**F 03 B 15/06**

(30) Priorité: **06.04.84 FR 8405611**

(43) Date de publication de la demande:
**16.10.85 Bulletin 85/42**

(84) Etats contractants désignés:
**AT BE CH DE GB IT LI LU NL SE**

(71) Demandeur: **Société ESAC S.A.**

**F-70800 Saint Loup sur Semouse(FR)**

(72) Inventeur: **Bassegoda, René**
**55 rue Aristide Briand**
**F-70300 Luxeuil-Les-Bains(FR)**

(74) Mandataire: **Bossard, Jacques-René**
**CABINET ARBOUSSE BASTIDE 20 rue de Copenhague**
**F-67000 Strasbourg(FR)**

(54) Procédé et installation pour la régulation de la fréquence d'un courant électrique.

(57) Procédé et installation pour la régulation de la fréquence du courant électrique fourni à un réseau de distribution autonome par une installation comportant une turbine hydraulique, en vue de limiter en grandeur et en temps les variations de fréquence susceptibles de se produire pendant une période limitée, de modification de fonctionnement de la turbine au moment d'une variation de consommation du réseau, du type dans lequel un volant d'intertie est connecté à l'installation de manière à emmagasiner ou à restituer respectivement les énergies nécessaires à la stabilité du réglage, caractérisé en ce que la connection entre l'installation et le volant est de nature électrique.

EP 0 158 576 A1

- 1 -

PROCEDE ET INSTALLATION POUR LA REGULATION DE LA FREQUENCE
D'UN COURANT ELECTRIQUE.

La présente invention concerne un perfectionnement aux installations de production d'énergie électrique à
partir d'énergie hydraulique en réseau autonome, et elle
vise plus spécialement un moyen nouveau pour la régulation de
fréquence du courant dans un tel réseau, quelles que soient
les variations plus ou moins brusques de la consommation.

On sait que dans de telles installations, on
rencontre le problème de maintien d'une fréquence aussi constante que possible, quelles que soient les surcharges ou les
sous-charges imposées à chaque moment par le réseau. En effet, si on se place à la puissance maximale fournie par la
turbine, pour une consommation donnée, et si, pour une certaine raison un très grand nombre de consommateurs cessent
de prélever du courant en même temps, l'alternateur produit
alors trop de puissance, de sorte que la turbine s'accélère
et tend à s'emballer. Le phénomène inverse peut également se
produire.

Il est connu que, pour surmonter cet inconvénient,
on peut assurer une régulation en agissant sur des organes
de manoeuvre tels que les pales de la turbine, mais l'effet
de telles actions exige un certain temps, de l'ordre de 3 à
10 secondes, pendant lesquelles, si les bases d'inertie de la
machine sont insuffisantes, on laisse persister cet inconvé-

0158576

- 2 -

nient.

Un moyen pour réduire les effets de cette période transitoire consiste à monter en bout de la ligne d'arbres un volant d'inertie, qui absorbe ou restitue de l'énergie pendant ladite période de réglage. Toutefois, comme la vitesse de rotation de la turbine est lente, pour être efficaces, ces volants doivent être relativement très gros, ce qui impose des diamètres d'arbres importants, et organes annexes, tels que des paliers correspondants, d'où une installation encombrante et coûteuse.

La présente invention apporte à ce problème une solution nouvelle et simple, éliminant ces inconvénients.

Cette solution consiste dans son principe à remplacer la liaison mécanique entre les organes en rotation (turbine, alternateurs) et les organes d'inertie (volant) par une liaison électrique. A cet effet, on branche sur les bornes de l'alternateur, en parallèle avec les connections sur le réseau, un moteur électrique dont le rôle est d'entraîner le volant d'inertie.

Dans ces conditions, ledit volant étant entraîné électriquement dans le cas de variations brusques de charge du réseau, c'est ce moteur qui, subissant une variation correspondante de son alimentation, déterminera une variation de vitesse de rotation correspondante du volant, qui par son inertie permet la stabilité du réglage, mais avec des conditions de fonctionnement abaissées de manière considérable par rapport au volant en bout de ligne d'arbre.

En d'autres termes, ce moteur joue pendant la période de réglage de la turbine au moment d'une variation de consommation, le rôle de génératrice d'appoint temporaire en cas de surconsommation du réseau et de point de consommation additionnelle temporaire en cas de sous consommation du réseau.

Bien entendu les caractéristiques précises d'un tel moteur et du volant qui lui est associé seront fonction de l'importance de l'ensemble de l'installation
et du réseau, mais ne s'écarteront pas de celles des moteurs
du commerce, de sorte que le procédé de régulation selon
l'invention peut être adapté sans aucune difficulté à n'importe quelle installation, déjà existante ou à mettre en
place.

De même l'emplacement sur lequel doit être
installé selon l'invention le moteur équipé d'un volant n'est
pas critique. Selon l'importance et l'encombrement des éléments de production de l'énergie électrique, ce moteur pourra
être associé à ces éléments, ou bien être installé séparément
par exemple sur la berge de la rivière alimentant la turbine.

A titre d'exemple, si l'on considère une
installation de ce genre dans laquelle on recueille en moyenne 1800 Kw aux bornes de l'alternateur, on choisit, pour des
variations de charges de $\pm$ 100 %, $\pm$ 50 %, et $\pm$ 25 %, des
variations de la vitesse de rotation de la turbine de respectivement $\mp$ 20 %, $\mp$ 8 %, et $\mp$ 4 %. Avec une vitesse de rotation nominale de 750 t/min. pour la turbine, l'inertie à
vaincre pour accélérer ou freiner la turbine sur la période
de 5-6 secondes considérée est de 19.900 kg m$^2$ (P.D$^2$).

Si, selon l'invention, on entraîne le volant au moyen d'un moteur formant à 3000 t/min, cet effort
n'est plus que de 1300 kg m$^2$. Cette diminution énorme permet
d'utiliser un volant beaucoup plus petit pour la même énergie emmagasinée ou restituée au moment d'une variation brusque de charge.

L'invention comporte au surplus un avantage additionnel lié aux modalités pratiques de mise en oeuvre. En effet, si l'on se place dans le cas le plus défavorable des incidents pouvant survenir dans les installations
classiques, il faut noter que l'emballement d'une turbine,
si les organes de manoeuvre destinés à en réduire la vitesse ne fonctionnent pas, peut aller jusqu'à 2,8 fois sa vitesse nominale ; cela a évidemment pour conséquence de choisir le diamètre du volant relativement petit pour éviter les tensions mécaniques excessives lors des emballements (ce qui augmente considérablement le poids du volant). Les tensions trop importantes risquent de faire éclater le volant.

Si, selon l'invention, la liaison mécanique du volant avec la turbine est remplacée par une liaison électrique comme il vient d'être décrit, il devient possible de couper cette liaison en cas d'emballement, par simple déconnexion du moteur. Le volant ne se trouve donc plus soumis à ce risque, ce qui permet de prévoir, dans de telles installations des volants encore plus petits, donc encore moins coûteux.

- 5 -

REVENDICATIONS.

1.          Procédé pour la régulation de la fréquence du courant électrique fourni à un réseau de distribution autonome par une installation comportant une turbine hydraulique, en vue de limiter en grandeur et en temps les variations de fréquence susceptibles de se produire pendant une période limitée, de modification de fonctionnement de la turbine au moment d'une variation de consommation du réseau, du type dans lequel un volant d'inertie est connecté à l'installation de manière à emmagasiner ou à restituer respectivement les énergies nécessaires à la stabilité du réglage, caractérisé en ce que la connection entre l'installation et le volant est de nature électrique.

2.          Procédé selon la revendication 1, caractérisé en ce que le volant est entraîné par un moteur électrique branché aux bornes de l'alternateur en parallèle avec le réseau.

3.      .      Procédé selon les revendications 1 et 2, caractérisé en ce que la liaison électrique entre le moteur et la turbine est coupée en cas d'emballement accidentel de la turbine.

4.          Installation pour la mise en oeuvre du procédé selon l'une quelconque des revendications 1 à 3, en vue de la régulation de la fréquence du courant électrique fourni à un réseau de distribution autonome par une installation comportant une turbine hydraulique, en vue de limiter en grandeur et en temps les variations de fréquence susceptibles de se produire pendant une période limitée, de modification de fonctionnement de la turbine au moment d'une variation de consommation du réseau, du type dans lequel un volant d'inertie est connecté à l'installation de manière à emmagasiner ou à restituer respectivement les énergies nécessaires à la stabilité du réglage, caractérisé en ce que la connection entre l'installation et le volant est de nature électrique.

5.        Installation selon la revendication 4, caractérisée en ce que le volant est entraîné par un moteur électrique branché aux bornes de l'alternateur en parallèle avec le réseau.

6.        Installation selon les revendications 4 et 5, caractérisée en ce que la liaison électrique entre le moteur et la turbine est coupée en cas d'emballement accidentel de la turbine.

**Office européen des brevets**

**RAPPORT DE RECHERCHE EUROPEENNE**

**0158576**
Numéro de la demande

EP 85 44 0001

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 117 353 (THE ENGLISH ELECTRIC CO.) * Page 1, ligne 1 - page 3, ligne 37; figure * | 1,4 | H 02 J 3/30 F 03 B 15/06 |
| Y | | 2,5 | |
| Y | CH-A- 137 858 (GEBRÜDER SULZER) * Page 1, colonne de gauche, lignes 1-10; page 2, colonne de gauche, ligne 23 - page 3, colonne de gauche, ligne 26; page 4, colonne de gauche, lignes 1-6; figure 3 * | 2,5 | |
| A | | 1,4 | DOMAINES TECHNIQUES RECHERCHES (Int. Cl.4) |
| A | DE-A-2 546 777 (LICENTIA) * Page 4, lignes 1-5; page 7, ligne 19 - page 8, ligne 4; figures 1,2 * | 1,4 | H 02 J 3 H 02 P 9 F 03 B 15 |
| A | US-A-3 667 012 (L.A. KILGORE) * Colonne 2, ligne 73 - colonne 3, ligne 47; figure 2 * | 1,4 | |
| A | FR-A-1 574 808 (SOCIETE DES FORGES ET ATELIERS DU CREUSOT) | | |

Le présent rapport de recherche a été établi pour toutes les revendications

| Lieu de la recherche | Date d'achèvement de la recherche | Examinateur |
|---|---|---|
| LA HAYE | 07-05-1985 | POINT A.G.F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82